# EUROPÄISCHE PATENTSCHRIFT

(11) **EP 2 756 566 B1**
(45) Veröffentlichungstag und Bekanntmachung des Hinweises auf die Patenterteilung: **29.03.2017**
(21) Anmeldenummer: 12769967.6
(22) Anmeldetag: 06.09.2012
(51) Int. Cl.: H02B 13/00, H02G 5/06

(54) **ISOLIERKÖRPER MIT FELDSTEUERELEMENTE FÜR EINE SAMMELSCHIENENANORDNUNG**
INSULATING BODY WITH FIELD CONTROL ELEMENTS FOR A BUSBAR ARRANGEMENT
CORPS ISOLANT POURVU D'ÉLÉMENTS DE COMMANDE DE CHAMP POUR UN ENSEMBLE BARRE OMNIBUS

(30) Priorität: 26.10.2011 DE 102011085219
(43) Veröffentlichungstag der Anmeldung: 23.07.2014
(73) Patentinhaber: Siemens Aktiengesellschaft, 80333 München (DE)
(72) Erfinder: ERMELER, Kristian, 60388 Frankfurt am Main (DE); HORZ, Christof, 56414 Salz (DE); BECHT, Dominik, 65597 Hünfelden (DE); HARBECKE, Günter, 63776 Mömbris (DE); HOHMANN, Stefan, 36100 Petersberg (DE); RESCH, Markus, 63263 Neu-Isenburg (DE); JUNKER, Guido, 63486 Bruchkoebel (DE)
(86) Internationale Anmeldenummer: PCT/EP2012/067385
(87) Internationale Veröffentlichungsnummer: WO 2013/060517

(56) Entgegenhaltungen:
- EP-A1- 0 457 081
- DE-A1- 2 050 769
- DE-A1- 4 312 261
- DE-A1-102007 003 636
- DE-C1- 10 119 333
- JP-A- 2003 235 138

## Beschreibung

Die Erfindung betrifft einen Isolierkörper für eine Sammelschienenanordnung mit einer hohlzylindrischen Innenkontur zur Aufnahme Potential führender Sammelschienenabschnitte, einem Zentriermittel zur Zentrierung und Kontaktierung der Sammelschienenabschnitte, einem inneren Feldsteuerelement, welches mit dem Zentriermittel elektrisch leitend verbunden ist sowie einem äußeren, auf Erdpotential befindlichen Feldsteuerelement.

Ein derartiger Isolierkörper ist beispielsweise aus der DE 10 2007 003 636 A1 bekannt. Der dort offenbarte Isolierkörper für eine Sammelschienenanordnung in Form einer Sammelschienenkupplung weist eine hohlzylindrische Innenkontur zur Aufnahme Potential führender Sammelschienenabschnitte in Form von Kontaktstücken und Verbindungselementen auf, die mittels eines Zentriermittels zentriert und kontaktiert werden. Ein inneres Feldsteuerelement in Form einer Leitlackschicht befindet sich in elektrisch leitender Verbindung mit dem Zentriermittel, so dass das innere Feldsteuerelement auf dem Potential der Sammelschienenabschnitte liegt. Ein äußeres Feldsteuerelement ist ebenfalls als Leitlackschicht ausgebildet und befindet sich auf Erdpotential, so dass durch das innere Feldsteuerelement und das äußere Feldsteuerelement eine Absteuerung des elektrischen Potentials vom Potential der Sammelschienen zu Erdpotential innerhalb des Isolierkörpers stattfindet, und Überschläge oder Teilentladungen sicher verhindert werden.

Auch ist aus der DE 20 50 769 A1 ein isolierender Abstandshalter mit einer äußeren Feldsteuerelektrode bekannt.

Die EP 0 457 081 A1 offenbart ein Isolierkörper mit zwei eingebetteten Steuerelektroden.

Die JP 2003 235138 A beschreibt eine isolierende Vorrichtung mit einer eingebetteten Steuerelektrode.

Aufgabe der vorliegenden Erfindung ist es, einen Isolierkörper der eingangs genannten Art weiterzubilden, der einerseits einfach herstellbar ist und andererseits über verbesserte Eigenschaften bezüglich der Feldabsteuerung verfügt.

Erfindungsgemäß gelöst wird dies bei einem Isolierkörper der eingangs genannten Art dadurch, dass das äußere Feldsteuerelement als stoffschlüssig mit dem Isolierkörper verbundener Volumenkörper ausgebildet ist und die weiteren Merkmalen des in Anspruch 1 genannten Isolierkörpers enthalten sind.

Ein derartiger Volumenkörper als äußeres Feldsteuerelement, welcher stoffschlüssig mit dem Isolierkörper verbunden ist, ist einerseits einfach herstellbar, weil der Volumenkörper als separates Bauteil vorbereitet werden kann und in einfacher Weise mit dem Material des Isolierkörpers vergossen werden kann und weist andererseits verbesserte Eigenschaften bezüglich der Feldabsteuerung auf, weil durch das Volumen des Volumenkörpers eine bessere Feldvergleichmäßigung gegeben ist.

In einer vorteilhaften Ausgestaltung der Erfindung weist der Volumenkörper einen im Isolierkörper eingebetteten Abschnitt und einen sich aus dem Isolierkörper heraus erstreckenden Kontaktabschnitt auf. Dadurch ist in einfacher Weise eine Kontaktierung des Volumenkörpers als äußeres Feldsteuerelement ermöglicht, weil der sich aus dem Isolierkörper heraus erstreckende Kontaktabschnitt leicht mit Erdpotential verbindbar ist.

In einer vorteilhaften Ausgestaltung der Erfindung erstreckt sich die hohlzylindrische Innenkontur durch den gesamten Isolierkörper hindurch, wobei der im Isolierkörper eingebettete Abschnitt ringscheibenförmig ausgebildet ist und sich der Kontaktabschnitt senkrecht vom ringscheibenförmigen Abschnitt nach außen hinweg erstreckt. Ein derartiger Isolierkörper ist vorteilhaft für eine Sammelschienenkupplung als Sammelschienenanordnung, weil sich durch die hohlzylindrische Innenkontur des Isolierkörpers hindurch Kontaktelemente und Verbindungsmittel der Sammelschienenanordnung hindurch erstrecken können, so dass der Isolierkörper mit innerem und äußerem Feldsteuerelement zur Feldsteuerung der Sammelschienenkupplung vorgesehen ist.

In der Erfindung ist durch den Volumenkörper eine Abdichtung der Sammelschienenanordnung gegenüber einem Außenbereich ausgebildet. Eine derartige Abdichtung führt zu einem einfachen und kostengünstigen Aufbau, weil mit einem derartigen Volumenkörper eine abdichtende Funktion gegen äußere Einflüsse wie beispielsweise angelagerte Feuchte und Schmutz gewährleistet ist, ohne dass weitere Dichtungsmaßnahmen durch zusätzliche Teile notwendig sind.

In einer anderen vorteilhaften Ausgestaltung der Erfindung ist der Isolierkörper als topfförmiger Isolierkörper ausgebildet, wobei der Volumenkörper als sich über einen Boden und zumindest teilweise über Wandabschnitte des topfförmig ausgebildeten Isolierkörpers erstreckender topfförmiger Volumenkörper ausgebildet ist. Ein derartiger topfförmiger Isolierkörper mit topfförmigem Volumenkörper als äußeres Feldsteuerelement ist vorteilhaft für einen Sammelschienenabschluss als Sammelschienenanordnung, welcher am Ende einer Schaltanlage mit aneinander gereihten einzelnen Schalterfeldern vorhanden ist, bei dem sich aus dem letzten Schalterfeld der Schaltanlage herauserstreckende Sammelschienenabschnitte gegen die Umgebung isoliert werden müssen und das Potential der Sammelschienenabschnitte ebenfalls gegen Erdpotential abgesteuert werden muss. Ein derartiger topfförmiger Isolierkörper wird mittels einer an der Schaltanlagenwand befestigbaren Haltemanschette befestigt, wobei mit dem erfindungsgemäßen Isolierkörper auch eine gleichzeitige Anbringung eines kapazitiven Spannungsmesssystems zur Bestimmung des Potentials der Sammelschienen möglich ist, ohne weitere Modifikation oder Veränderung des Isolierkörpers bzw. des äußeren Feldsteuerelementes in Form des topfförmigen Volumenkörpers.

Die Erfindung wird im Folgenden anhand der Zeichnung und Ausführungsbeispielen mit Bezug auf die beiliegenden Figuren näher erläutert. Es zeigen:
- Figur 1: ein erstes Ausführungsbeispiel eines erfindungsgemäßen Isolierkörpers;
- Figur 2: ein zweites Ausführungsbeispiel eines erfindungsgemäßen Isolierkörpers;
- Figur 3: ein drittes Ausführungsbeispiel eines erfindungsgemäßen Isolierkörpers; und
- Figur 4: ein viertes Ausführungsbeispiel eines erfindungsgemäßen Isolierkörpers.

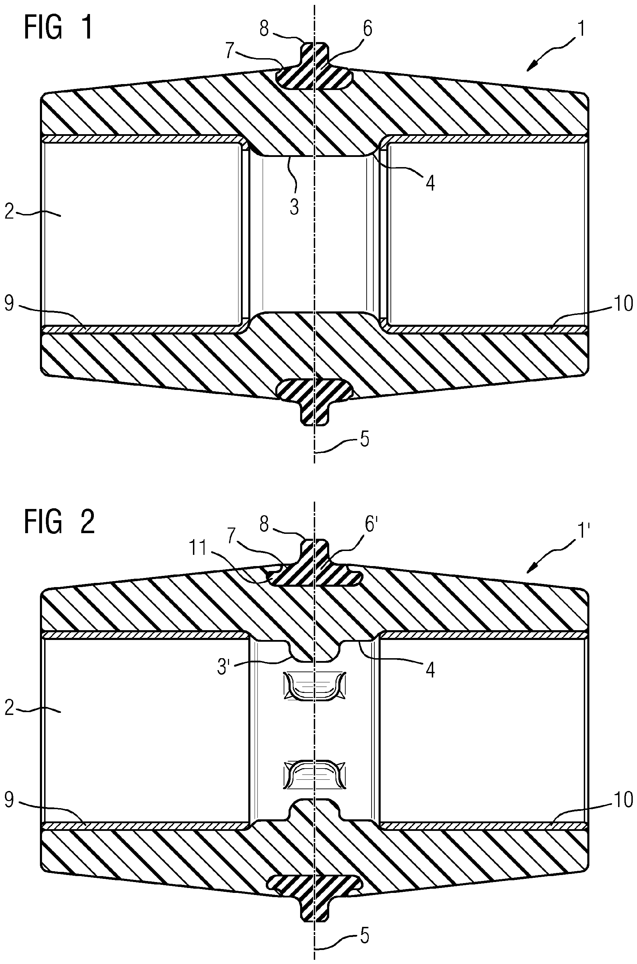

Figur 1 zeigt einen Isolierkörper 1 für eine figürlich nicht weiter dargestellte Sammelschienenkupplung, die zum Verbinden von Schalterfeldern einer Mittelspannungsschaltanlage vorgesehen ist, bei der sich beispielsweise aus einem gekapselten gasisolierten Behälter heraus Sammelschienenabschnitte durch Isolierbuchsen aus den Schalterfelderwänden erstrecken, welche Isolierbuchsen an den Schalterfelderwänden der Schaltanlage befestigt sind, wobei die Kontaktstücke mittels Verbindungselementen elektrisch leitend miteinander verbunden werden. Bei einer derartigen Sammelschienenkupplung wie beispielsweise in der DE 10 2007 003 636 A1 beschrieben, auf deren Offenbarung hiermit Bezug genommen wird, ist eine Isolation der spannungsführenden Sammelschienenabschnitte sowie eine Absteuerung des entstehenden elektrischen Feldes notwendig, um Teilentladungen oder Überschläge zu verhindern. Der Isolierkörper 1, welcher vorzugsweise aus Silikon oder einem anderen isolierenden Material ausgebildet ist, weist dazu eine hohlzylindrische Innenkontur 2 auf, die zur Aufnahme der spannungsführenden Sammelschienenabschnitte vorgesehen ist. Ein Zentriermittel 3 in Form einer umlaufenden Auswölbung der hohlzylindrischen Innenkontur 2 ist zur Zentrierung von Verbindungsmitteln der Sammelschienenabschnitte vorgesehen und dient gleichzeitig zur elektrisch leitenden Verbindung mit den Potential führenden Sammelschienenabschnitten, da die hohlzylindrische Innenkontur mit einer Leitlackschicht 4 als innerem Feldsteuerelement des Isolierkörpers 1 versehen ist.

Bezüglich einer Mittelachse 5 ist im Isolierkörper 1 ein äußeres Feldsteuerelement 6 mittig in Form eines Volumenkörpers vorgesehen, welches stoffschlüssig mit dem Isolierkörper verbunden ist, beispielsweise in dem der Volumenkörper in den Isolierkörper 1 eingegossen ist. Der Volumenkörper als äußeres Feldsteuerelement 6 weist dabei einen ringscheibenförmigen Abschnitt 7 auf, welcher im Isolierkörper 1 eingebettet ist, sowie einen sich senkrecht vom ringscheibenförmigen Abschnitt 7 nach außen wegerstreckenden Kontaktabschnitt 8, welcher zur Abdichtung der Sammelschienenkupplung zwischen den beiden figürlich nicht dargestellten Schalterfeldern der Schaltanlage gegen äußere Einflüsse wie beispielsweise angelagerte Feuchte und Schmutz dient und andererseits zur elektrischen Kontaktierung des äußeren Feldsteuerelementes 6, um dieses auf Erdpotential zu legen. Der Isolierkörper 1 ist weiterhin mit separaten Stützhülsen 9 bzw. 10 versehen, welche zur mechanischen Stabilisierung des Isolierkörpers 1 in der Sammelschienenkupplung vorgesehen sind. Durch das innere Feldsteuerelement in Form der Leitlackschicht 4, welches auf dem Potential der Sammelschienenabschnitte, die sich durch die hohlzylindrische Innenkontur 2 des Isolierkörpers 1 hindurch erstrecken, liegt, sowie das äußere Feldsteuerelement 6 in Form des stoffschlüssig mit dem Isolierkörper 1 verbundenen Volumenkörpers wird somit eine Feldabsteuerung des Potentials der Sammelschienen der Schaltanlage durch den Isolierkörper 1 hindurch zum Erdpotential des äußeren Feldsteuerelementes 6 hin erreicht, wobei durch den Volumenkörper des äußeren Feldsteuerelementes 6 eine Vergleichmäßigung des elektrischen Feldes erreicht wird, so dass lokale Feldüberhöhungen oder Feldspitzen wirksam verhindert werden und Teilentladungen oder Überschläge wirksam unterdrückt werden.

Figur 2 zeigt einen Isolierkörper 1', welcher sich von dem Isolierkörper 1 der Figur 1 bezüglich der Ausgestaltung des Zentriermittels 3' unterscheidet, welches in der Figur 2 durch umfänglich angeordnete Noppen zur Zentrierung und Kontaktierung von Verbindungsmitteln der Sammelschienenkupplung gebildet ist, sowie in der Gestaltung des äußeren Feldsteuerelementes 6'. Das innere Feldsteuerelement 4 des Isolierkörpers 1' ist ebenfalls als Leitlackschicht vorgesehen und erstreckt sich über die Noppen des Zentriermittels 3', so dass das innere Feldsteuerelement in Form der Leitlackschicht 4 ebenfalls auf dem Potential der Sammelschienenabschnitte liegt. Das äußere Feldsteuerelement 6' weist in der Figur 2 neben dem ringscheibenförmigen Abschnitt 7 und dem Kontaktabschnitt 8 einen weiteren Stufenabschnitt 11 auf, welcher vollständig vom Isolierkörper 1 umgeben ist. Mit einem derartigen weiteren Stufenabschnitt 11 des äußeren Feldsteuerelementes 6 ergibt sich eine weiter verbesserte Feldvergleichmäßigung und damit weiterhin verbesserte Feldsteuereigenschaften. Der Volumenkörper der Ausführungsbeispiele der Figuren 1 und 2 bildet dabei neben dem äußeren Feldsteuerelement auch eine Abdichtung der Sammelschienenanordnung gegenüber einem Außenbereich und schützt somit die Sammelschienenkupplung gegen äußere Einflüsse wie beispielsweise angelagerte Feuchte und Schmutz aus dem Außenraum der Schaltanlage, ohne dass weitere Dichtungsmaßnahmen durch zusätzliche Teile notwendig sind.

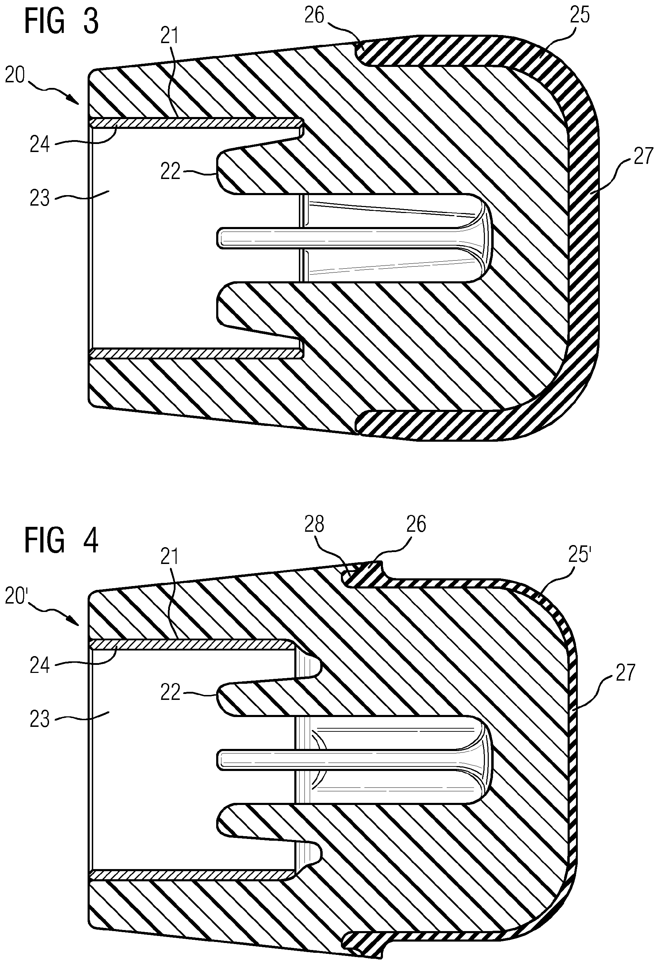

Figur 3 zeigt einen Isolierkörper 20 für einen Sammelschienenabschluss einer figürlich nicht dargestellten Schaltanlage, bei der am Rand befindlichen Schalterfeld eine sich aus der Schaltanlage heraus erstreckende Sammelschiene gegen die Umgebung elektrisch isoliert werden muss und das elektrische Feld ebenfalls gegen Erdpotential abzusteuern ist. Der Isolierkörper 20 besteht dabei ebenfalls aus Silikon oder einem anderen geeigneten isolierenden Material und weist ein inneres Feldsteuerelement 21 in Form einer Leitlackschicht auf, welche über ein Zentriermittel 22 zur Kontaktierung und Zentrierung der figürlich nicht dargestellten Sammelschienen kontaktiert wird und auf das Potential der Sammelschienen gelegt wird, die sich durch eine hohlzylindrische Innenkontur 23 des Isolierkörpers 20 erstrecken. Eine Einlegehülse 24 ist zur mechanischen Stabilisierung der hohlzylindrischen Innenkontur 23 des Isolierkörpers 20 vorgesehen. Ein äußeres Feldsteuerelement 25 in Form eines Volumenkörpers, der stoffschlüssig mit dem Isolierkörper verbunden ist, umfasst einen im Isolierkörper eingebetteten Abschnitt 26 sowie einen sich daran anschließenden Kontaktabschnitt, wobei der im Isolierkörper eingebettete Abschnitt 26 und der Kontaktabschnitt 27 zusammen einen topfförmigen Volumenkörper ausbilden, welcher mit dem Isolierkörper 20 in Form eines topfförmigen Isolierkörpers eine stoffschlüssige Verbindung ausbildet. Ein derartiger Sammelschienenabschluss-Isolierkörper wird mittels einer figürlich nicht dargestellten Haltemanschette an der Schaltanlagenwand der Schaltanlage befestigt, beispielsweise durch eine Verschraubung oder mittels geeigneter Spannelemente, wobei mit dem Isolierkörper 20 eine Anwendung eines kapazitiven Spannungsabgriffs zur kapazitiven Spannungsbestimmung des Sammelschienensystems der figürlich nicht dargestellten Schaltanlage ebenfalls möglich ist.

Figur 4 zeigt einen Isolierkörper 20', welcher sich in der Ausgestaltung des äußeren Feldsteuerelementes 25' vom Isolierkörper 20 der Figur 3 unterscheidet, indem das äußere Feldsteuerelement 25' neben dem Abschnitt 26 und dem Kontaktabschnitt 27 einen weiteren stufenförmigen Absatz 28 aufweist, welcher vollständig vom Isolierkörper 20' umgeben ist und bezüglich der Feldsteuerung eine weitere Vergleichmäßigung und somit verbesserte Feldsteuereigenschaften aufweist.

### Bezugszeichenliste

- 1, 1': Isolierkörper
- 2: Hohlzylindrische Innenkontur
- 3, 3': Zentriermittel
- 4: Leitlackschicht
- 5: Mittelachse
- 6, 6': Äußeres Feldsteuerelement
- 7: Ringscheibenförmiger eingebetteter Abschnitt
- 8: Kontaktabschnitt
- 9, 10: Stützhülsen
- 11: Stufenförmiger Abschnitt
- 20, 20': Isolierkörper
- 21: Inneres Feldsteuerelement
- 22: Zentriermittel
- 23: Hohlzylindrische Innenkontur
- 24: Stützhülse
- 25, 25': Äußeres Feldsteuerelement
- 26: Eingebetteter Abschnitt
- 27: Kontaktabschnitt
- 28: Stufenförmiger Absatz

## Patentansprüche

1. Isolierkörper (1, 1', 20, 20') für eine Sammelschienenanordnung mit einer hohlzylindrischen Innenkontur (2, 23) zur Aufnahme Potential führender Sammelschienenabschnitte, einem Zentriermittel (3, 3', 22) zur Zentrierung und Kontaktierung der Sammelschienenabschnitte, einem inneren Feldsteuerelement (4, 21), welches mit dem Zentriermittel (3, 3', 22) elektrisch leitend verbunden ist sowie einem äußeren, auf Erdpotential befindlichen Feldsteuerelement (6, 6', 25, 25'), wobei
das äußere Feldsteuerelement (6, 6', 25, 25') als stoffschlüssig mit dem Isolierkörper (1, 1', 20, 20') verbundener Volumenkörper ausgebildet und
**dadurch gekennzeichnet, dass**
- entweder das äußere Feldsteuerelement (6) bezüglich der Mittelachse (5) des Isolierkörpers mittig vorgesehen ist, oder durch den Volumenkörper eine Abdichtung der Sammelschienenanordnung gegenüber einem Außenbereich ausgebildet ist, und
- entweder das äußere Feldsteuerelement (6) einen ringscheibenförmigen Abschnitt (7) aufweist, welcher in den Isolierkörper 1 eingebettet ist, sowie einen sich senkrecht vom ringscheibenförmigen Abschnitt (7) nach außen wegerstreckenden Kontaktabschnitt (8), oder das äußeres Feldsteuerelement (25) in Form eines Volumenkörpers, der stoffschlüssig mit dem Isolierkörper verbunden ist, einen im Isolierkörper eingebetteten Abschnitt (26) sowie einen sich daran anschließenden Kontaktabschnitt, wobei der im Isolierkörper eingebettete Abschnitt (26) und der Kontaktabschnitt (27) zusammen einen topfförmigen Volumenkörper ausbilden, umfasst, welcher mit dem Isolierkörper (20) in Form eines topfförmigen Isolierkörpers eine stoffschlüssige Verbindung ausbildet und
- das innere Feldsteuerelement (4, 21) in Form einer Leitlackschicht ausgebildet ist, und
- dass der Isolierkörper (1, 20, 20') mit separaten Stützhülsen (9,10, 24) versehen ist.

2. Isolierkörper (1, 1', 20, 20') nach Anspruch 1,
**dadurch gekennzeichnet, dass** der Volumenkörper einen im Isolierkörper (1, 1', 20, 20') eingebetteten Abschnitt (7, 11, 26, 28) und einen sich aus dem Isolierkörper heraus erstreckenden Kontaktabschnitt (8, 27) aufweist.

3. Isolierkörper (1, 1') nach Anspruch 1 oder 2,
**dadurch gekennzeichnet, dass** sich die hohlzylindrische Innenkontur (2) durch den gesamten Isolierkörper (1, 1') hindurch erstreckt, wobei der im Isolierkörper (1, 1') eingebettete Abschnitt (7, 11) ringscheibenförmig ausgebildet ist und sich der Kontaktabschnitt (8) senkrecht vom ringscheibenförmigen Abschnitt (7, 11) nach außen hinweg erstreckt.

4. Isolierkörper (20, 20') nach Anspruch 1,
**dadurch gekennzeichnet, dass** der Isolierkörper (20, 20') als topfförmiger Isolierkörper ausgebildet ist, wobei der Volumenkörper als ein sich über einen Boden und zumindest teilweise über Wandabschnitte des topfförmig ausgebildeten Isolierkörpers (20, 20') erstreckender topfförmiger Volumenkörper ausgebildet ist.

## Claims

1. Insulating body (1, 1', 20, 20') for a busbar arrangement having a hollow-cylindrical inner contour (2, 23) for receiving potential-carrying busbar sections, a centring means (3, 3', 22) for centring and making contact with the busbar sections, an inner field control element (4, 21) which is electrically conductively connected to the centring means (3, 3', 22), and also an outer field control element (6, 6', 25, 25') which is at earth potential, wherein
the outer field control element (6, 6', 25, 25') is designed as a volume body which is cohesively connected to the insulating body (1, 1', 20, 20'),
**characterized in that**
- either the outer field control element (6) is provided centrally with respect to the centre axis (5) of the insulating body, or sealing of the busbar arrangement from an outer region is formed by the volume body, and
- either the outer field control element (6) has an annular-disc-shaped section (7), which is embedded into the insulating body (1), and also a contact section (8) which extends away perpendicularly from the annular-disc-shaped section (7) to the outside, or the outer field control element (25) in the form of a volume body which is cohesively connected to the insulating body comprises a section (26), which is embedded in the insulating body, and also an adjoining contact section, wherein the section (26), which is embedded in the insulating body, and the contact section (27) together form a pot-like volume body which forms a cohesive connection with the insulating body (20) in the form of a pot-like insulating body, and
- the inner field control element (4, 21) is designed in the form of a conductive coating layer, and
- **in that** the insulating body (1, 20, 20') is provided with separate support sleeves (9, 10, 24).

2. Insulating body (1, 1', 20, 20') according to Claim 1, **characterized in that** the volume body has a section (7, 11, 26, 28), which is embedded in the insulating body (1, 1', 20, 20'), and a contact section (8, 27) which extends out of the insulating body.

3. Insulating body (1, 1') according to Claim 1 or 2, **characterized in that** the hollow-cylindrical inner contour (2) extends through the entire insulating body (1, 1'), wherein the section (7, 11) which is embedded in the insulating body (1, 1') is designed in the shape of an annular disc and the contact section (8) extends away perpendicularly from the annular-disc-shaped section (7, 11) to the outside.

4. Insulating body (20, 20') according to Claim 1, **characterized in that** the insulating body (20, 20') is designed as a pot-like insulating body, wherein the volume body is designed as a pot-like volume body which extends over a base and at least partially over wall sections of the insulating body (20, 20') which is designed in the form of a pot.

## Revendications

1. Corps (1, 1', 20, 20') isolant pour un agencement de barre omnibus ayant un contour (2, 23) intérieur cylindrique creux de réception de segments de barre omnibus conduisant à un potentiel, un moyen (3, 3', 22) de centrage et de mise en contact des segments de barre omnibus, un élément (4, 21) intérieur de commande de champ, qui est relié d'une manière conductrice de l'électricité au moyen (3, 3', 22) de centrage, ainsi qu'un élément (6, 6', 25, 25') extérieur se trouvant au potentiel de terre de commande de champ, dans lequel l'élément (6, 6', 25, 25') extérieur de commande de champ est constitué sous la forme d'un corps en volume relié à coopération de matière avec le corps (1, 1', 20, 20') isolant et
**caractérisé en ce que**
- ou bien l'élément (6) extérieur de commande de champ est prévu au milieu par rapport à l'axe (5) médian du corps isolant ou il est constitué par le corps en volume une étanchéité de l'agencement de barre omnibus par rapport à une région extérieure et
- ou bien l'élément (6) extérieur de commande de champ a un segment (7) en forme de disque annulaire, qui est incorporé dans le corps (1) isolant, ainsi qu'un segment (8) de contact s'étendant vers l'extérieur perpendiculairement au segment (7) en forme de disque annulaire, ou l'élément (25) extérieur de commande de champ, qui est relié à coopération de matière avec le corps isolant, comprend un segment (26) incorporé dans le corps isolant, ainsi qu'un segment de contact s'y raccordant, le segment (26) incorporé dans le corps isolant et le segment (27) de contact constituant ensemble un corps en volume en forme de pot, qui constitue avec le corps (20) isolant sous la forme d'un corps isolant en forme de pot une liaison à coopération de matière et
- l'élément (4, 21) intérieur de commande de champ est constitué sous la forme d'une couche de vernis conductrice et
- **en ce que** le corps (1, 20, 20') isolant est pourvu de manchons (9, 10, 24) d'appui distincts.

2. Corps (1, 1', 20, 20') isolant suivant la revendication 1,
**caractérisé en ce que**
le corps en volume a un segment (7, 11, 26, 28) incorporé dans le corps (1, 1', 20, 20') isolant et un segment (8, 27) de contact s'étendant en-dehors du corps isolant.

3. Corps (1, 1') isolant suivant la revendication 1 ou 2,
**caractérisé en ce que**
le contour (2) intérieur cylindrique creux traverse tout le corps (1, 1') isolant, le segment (7, 11) incorporé dans le corps (1, 1') isolant étant constitué sous la forme d'un disque annulaire et le segment (8) de contact s'étendant vers l'extérieur perpendiculairement au segment (7, 11) en forme de disque annulaire.

4. Corps (20, 20') isolant suivant la revendication 1,
**caractérisé en ce que**
le corps (20, 20') isolant est constitué sous la forme d'un corps isolant en forme de pot, le corps en volume étant constitué sous la forme d'un corps en volume en forme de pot s'étendant sur un fond et, au moins en partie, sur des parties de paroi du corps (20, 20') isolant constitué sous la forme d'un pot.
